# EUROPÄISCHE PATENTSCHRIFT

(11) **EP 0 885 352 B1**
(45) Veröffentlichungstag und Bekanntmachung des Hinweises auf die Patenterteilung: **29.12.1999**
(21) Anmeldenummer: 97903197.8
(22) Anmeldetag: 03.03.1997
(51) Int. Cl.: F02B 33/42, F01N 3/28, F01N 3/20

(54) **OTTO-MOTOR MIT DRUCKWELLENLADER**
SPARK IGNITION ENGINE WITH PRESSURE-WAVE SUPERCHARGER
MOTEUR A ALLUMAGE PAR ETINCELLE AVEC SURCOMPRESSEUR A ONDES DE PRESSION

(30) Priorität: 05.03.1996 EP 96810128
(43) Veröffentlichungstag der Anmeldung: 23.12.1998
(73) Patentinhaber: Swissauto Engineering S.A., 1037 Etagnières (CH)
(72) Erfinder: WENGER, Urs, CH-4900 Langenthal (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE
(86) Internationale Anmeldenummer: CH9700079
(87) Internationale Veröffentlichungsnummer: WO9733080

(56) Entgegenhaltungen:
- EP-A- 0 415 128
- DE-C- 3 732 301
- US-A- 4 553 387
- US-A- 4 702 075
- PATENT ABSTRACTS OF JAPAN vol. 011, no. 392 (M-653), 22.Dezember 1987 & JP 62 159717 A (MITSUBISHI MOTORS CORP), 15.Juli 1987,
- PATENT ABSTRACTS OF JAPAN vol. 011, no. 196 (M-601), 24.Juni 1987 & JP 62 020614 A (MAZDA MOTOR CORP), 29.Januar 1987,
- PATENT ABSTRACTS OF JAPAN vol. 018, no. 563 (M-1693), 27.Oktober 1994 & JP 06 200746 A (MAZDA MOTOR CORP), 19.Juli 1994,
- PATENT ABSTRACTS OF JAPAN vol. 016, no. 328 (M-1281), 16.Juli 1992 & JP 04 094420 A (MAZDA MOTOR CORP), 26.März 1992,
- PATENT ABSTRACTS OF JAPAN vol. 009, no. 326 (M-441), 21.Dezember 1985 & JP 60 159337 A (MAZDA KK), 20.August 1985,

## Beschreibung

Otto-Motoren werden nun seit über 100 Jahren gebaut und werden ständig hinsichtlich Leistung und Verminderung des Kraftstoffverbrauches verbessert. Dabei kann die Verminderung des Kraftstoffverbrauches bei konventionellen Otto-Motoren nur schrittweise erfolgen, da inzwischen bereits erhebliche Verbesserungen durchgeführt worden sind. Ausserdem wurde in letzter Zeit intensiv daran gearbeitet, den Schadstoffausstoss zu verringern, und dazu werden in Abgasreinigungssystemen verschiedene Katalysatoren verwendet, wobei sich der geregelte Dreiwegkatalysator durchgesetzt hat, der eine simultane Konversion der drei massgeblichen Schadstoffkomponenten ermöglicht.

Druckwellenlader an sich sind bekannt, wobei Abgas und Luft kurzzeitig in an beiden Enden offenen Zellen in direkten Kontakt gebracht werden. Es sind von verschiedenen Firmen Versuche unternommen worden, Druckwellenlader im Automobilbau zu verwenden, dabei zielten die meisten Versuche darauf ab, die Leistung des Motors zu erhöhen. Soweit bekannt, wurden Druckwellenlader in Serie nur im Zusammenhang mit Diesel-Motoren gebaut.

Aus der EP 0 415 128A ist ein Motor gemäss Oberbegriff von Anspruch 1 bekannt, worin vorgeschlagen wird, in einer Brennkraftmaschine mit einem Druckwellenlader die Alterung des Katalysators dadurch zu minimieren, dass der Katalysator motornahe angeordnet und durch die Ladeluft gekühlt wird.

Aus der JP 62-159717A ist ein Motor mit Aufladung bekannt, bei welchem am Auslass ein Dreiwegkatalysator angeordnet ist, der nur bei Langsamfahren eingeschaltet wird.

Aus der DE 37 32 301C ist eine Vorrichtung zur Entgiftung des Abgases einer Brennkraftmaschine bekannt, wobei ein Dreiwegkatalysator verwendet wird, dem ein Oxydations-Katalysator nachgeschaltet ist. Dabei wird die Temperaturerhöhung im Oxydations-Katalysator gemessen und für eine Rückkopplungsregelung verwertet.

Ausgehend von diesem Stand der Technik ist es Aufgabe der vorliegenden Erfindung einen Otto-Motor anzugeben, der sowohl eine wesentlich höhere spezifische Leistung als auch einen wesentlich geringeren Schadstoffausstoss aufweist. Diese Aufgabe wird mit dem Otto-Motor gemäss Patentanspruch 1 gelöst, der eine Kombination eines Otto-Motors mit einem Druckwellenlader, einem Dreiwegkatalysator und zusätzlich einem Oxydations-Katalysator offenbart.

Weitere Merkmale und Vorteile sind in den abhängigen Ansprüchen definiert, insbesondere auch Mittel zur Verhinderung von Nachteilen beim Kaltstart.

Die Erfindung wird im folgenden anhand einer Zeichnung eines Ausführungsbeispiels näher erläutert. Die einzige Figur zeigt schematisch einen erfindungsgemässen Otto-Motor mit effizienter Abgasreinigung.

In der einzigen Figur erkennt man den Otto-Motor 1, ein Verbrennungsmotor, eine Drosselklappe 2 im Ansaugkanal 3 und einen Dreiwegkatalysator 4 im Auslass 15. Der Motor, der irgend ein bekannter Verbrennungsmotor wie Automobil) oder Flugmotor sein kann und mit dem Saugrohr 16, dem Ventilator 17 und dem Abtrieb 18 gezeichnet ist sowie der Dreiwegkatalysator 4 bilden einen herkömmlichen Otto-Motor, wie er eingangs als Stand der Technik beschrieben ist.

Zu diesem herkömmlichen Otto-Motor ist ein Druckwellenlader 5 beigegeben, der vorzugsweise mit einem Ladeluftkühler 6 im Ansaugkanal betrieben wird und gegebenenfalls einen Antrieb 7 aufweist, der elektrisch oder mechanisch sein kann oder aber bei geeigneter Formgebung und Dimensionierung des Druckwellenladers auch entfallen kann. Im Lufteinlass 8 befindet sich ein Luftfilter 9 und - in Abweichung zu den bekannten Druckwellenladersystemen - eine Lader-Drosselklappe 10. Am Auspuff 11 ist als zweiter Katalysator ein Oxydationskatalysator 12 angeordnet. Zur Steuerung der Katalysatoren dienen die Lambda-Sonde 13, der Temperaturfühler 14 sowie die sogenannte Wastegate-Klappe 19.

Die Pfeile in den Kanälen weisen auf den Verlauf der Luft- und Gasströme hin, und man entnimmt diesem Schema, dass die Frischluft beim Lufteintritt 8 angesogen wird und über das Luftfilter 9 und die Lader-Drosselklappe 10 in den Druckwellenlader 5 gelangt. Dort wird der grösste Teil der Frischluft durch die Aktion der Abgase verdichtet und über den Ladeluftkühler 6 und die Drosselklappe 2 dem Verbrennungsmotor 1 zugeführt. Ein kleiner Teil der Frischluft gelangt, in Form von Spülluft, durch den Druckwellenlader 5 in den Auspuff 11 und vermischt sich dort mit den Abgasen. Die Abgase kommen vom Verbrennungsmotor 1 über den Dreiwegkatalysator 4 zum Druckwellenlader 5 und gelangen anschliessend, mit Frischluft durchsetzt, über den Oxydationskatalysator 12 zum Auspuff 11.

Die Wastegate-Klappe 19 kann bei zu hohem Ladedruck geöffnet werden, so dass ein Teil der Abgase am Druckwellenlader 5 vorbeigeleitet wird wodurch ein kleineres Druckverhältnis erzeugt wird. So erzielt man einen besseren Gesamtwirkungsgrad für die Antriebseinheit und reduziert somit den Treibstoffverbrauch. Anstatt einer Wastegate-Klappe können auch andere, an sich bekannte Mittel zur Steuerung des Ladedruckes verwendet werden.

Die Lader-Drosselklappe 10 dient zur Steuerung der Spülluft. Mit ihr kann der Anteil an Frischluft, der in den Auspuff gelangt, reduziert werden. Dadurch wird die Abgastemperatur beim Oxydationskatalysator 12 erhöht, damit dieser schneller seine Anspringtemperatur erreicht und somit einen höheren Konvertierungsgrad erzielt. Das Signal des Temperaturfühlers 14 kann als Grösse für die Steuerung der Lader-Drosselklappe verwendet werden. Als weitere Steuergrössen können u. a. auch die Drehzahl des Motors sowie der Druck nach der Drosselklappe 2 dienen. Die Lambda-Sonde 13 liefert die Regelgrösse für die Gemischbildung.

Der Motor wird mit einem Lambdaverhältnis von 1 oder mit leichtem Treibstoffüberschuss betrieben. Bekanntermassen stellt der Dreiwegkatalysator in Verbindung mit der elektronisch geregelten Gemischaufbereitung (Lambda-Sonde) das derzeit wirksamste katalytische Abgasreinigungssystem dar. Dabei ist eine simultane Konversion aller drei Schadstoffkomponenten möglich, wobei ein möglichst exaktes stöchiometrisches Kraftstoff-Luft-Gemisch (Lambda 1) erforderlich ist. Bei diesen drei Komponenten handelt es sich um HC, CO und NO_{X}. Durch eine Verschiebung des Regelbereichs Lambda 1 zur fetteren Seite können jedoch die NO_{X} sehr effizient konvertiert und entfernt werden. Dies würde jedoch zu einer Verminderung der Konvertierungsrate der übrigen zwei Komponenten führen und wäre daher nicht sinnvoll, falls nur ein Dreiwegkatalysator verwendet wird.

Durch die Verwendung eines Druckwellenladers wird der Wirkungsgrad des Verbrennungsmotors gesteigert und ermöglicht auch dadurch, dass durch den Druckwellenlader in der Auspuffanlage ein Luftüberschuss erzeugt wird, dort die Verwendung eines Oxydationskatalysators, wodurch die verbleibenden Schadstoffe, die zum grössten Teil aus HC und CO bestehen, optimal konvertiert werden können. Je nach Katalysatorbeschichtung kann auch im Oxydationskatalysator noch eine wesentliche NO_{X}-Konvertierungsrate erreicht werden.

Falls die Abgastemperatur am Auslass 15 gering ist, z.B. beim Kaltstart, wird die Konvertierungsrate am Katalysator kleiner, woraus sich hohe Abgasemissionen ergeben.

Ferner wird der Druckwellenprozess im Lader immer problematischer, je tiefer die Abgastemperaturen sind, wobei dieser Prozess im Extremfall ganz zum Erliegen kommen kann. Daher kann zu Beginn bei kaltem Motor nur ein reduzierter Ladedruck erreicht werden, was zu einer geringen Motorleistung führt.

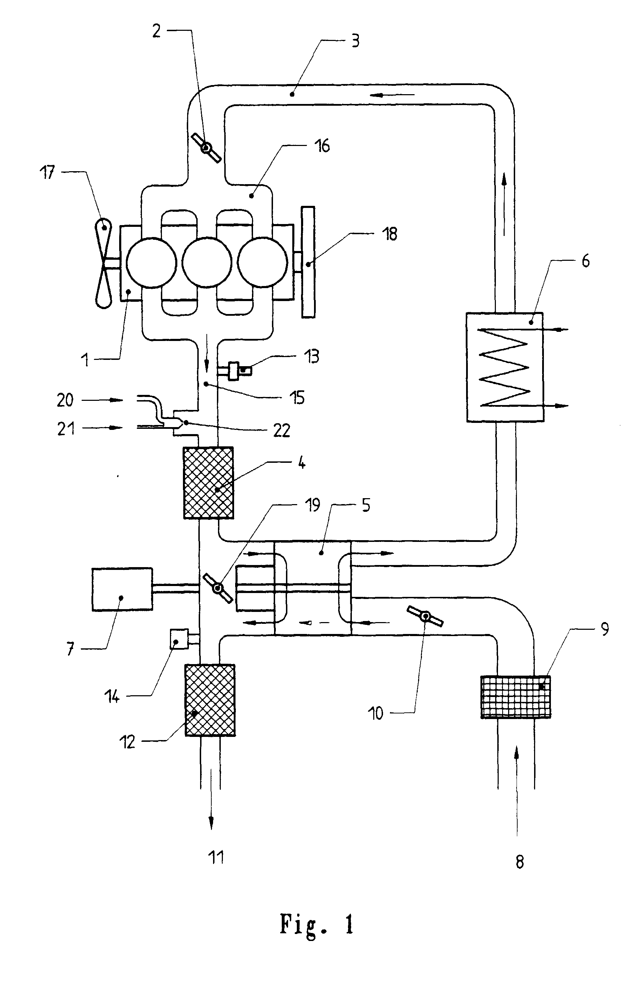

Diesen beiden Problemen kann dadurch entgegengewirkt werden, dass zwischen dem Auslass 15 und dem DreiwegKatalysator 4 ein Brenner 22 angeordnet wird, der bei tiefer Abgastemperatur eingeschaltet wird. Dadurch wird einerseits der Katalysator schneller auf seine optimale Betriebstemperatur gebracht und andererseits gelangen die Gase mit höherer Temperatur zum Lader. Dadurch kommt der Druckwellenprozess bereits bei kaltem Motor in Gang und die ganze Motorleistung steht zur Verfügung. In Fig. 1 ist ausserdem die Luftzufuhr 20 und die Brennstoffzufuhr 21 für den Brenner 22 erkennbar.

Anstatt eines beschriebenen Brenners 22 können auch andere Heizeinrichtungen, z.B. eine elektrisch betriebene Heizung verwendet werden. Wichtig ist dabei, sowohl die Funktion des Katalysators als auch des Laders günstig zu beeinflussen.

Die Verwendung eines Druckwellenladers mit einem Otto-Motor ermöglicht somit eine grosse Leistungssteigerung und vor allem auch den Einsatz eines nachgeschalteten Oxydations-Katalysators, wodurch der Dreiwegkatalysator die eine Schadstoffkomponente, das NO_{X}, effizienter beseitigen kann als bei einem herkömmlich verwendeten Dreiwegkatalysator und andererseits die verbleibenden Schadstoffe, HC und CO, durch den Luftüberschuss im Oxydationskatalysator mit besonders grosser Konvertierungsrate entfernt werden können.

Aus diesem System resultiert eine erhebliche Reduzierung der Schadstoffe im Vergleich zu herkömmlichen Otto-Motoren. Es ist sebstverständlich, dass im Vergleich zu einem konventionellen Otto-Motor durch die Verwendung eines Druckwellenladers bei gleicher Leistung beispielsweise ein kleinerer Motor mit geringerem Treibstoffverbrauch oder ein Motor mit insgesamt kleinerem Gewicht verwendet werden kann und dies bei erheblich kleinerem Schadstoffausstoss.

## Patentansprüche

1. Otto-Motor in Kombination mit einem Druckwellenlader (5) und einem geregelten Dreiwegkatalysator (4), dadurch gekennzeichnet, dass dem Dreiwegkatalysator (4) ein Oxydationskatalysator (12) nachgeschaltet ist, der zwischen dem Auslass des Druckwellenladers (5) und dem Auspuff (11) angeordnet ist.

2. Motor nach Anspruch 1, dadurch gekennzeichnet, dass am Einlass zum Druckwellenlader (5) eine Lader-Drosselklappe (10) angeordnet ist, um die Spülluftmenge zu steuern.

3. Motor nach Anspruch 1 oder 2, dadurch gekennzeichnet, dass am Auslass des Druckwellenladers (5) Steuermittel angeordnet sind, um den Ladedruck zu regeln.

4. Motor nach Anspruch 3, dadurch gekennzeichnet, dass die Steuermittel eine Wastegate-Klappe (19) enthalten.

5. Motor nach einem der Ansprüche 1 bis 4, dadurch gekennzeichnet, dass der Druckwellenlader (5) einen Antrieb (7) aufweist, der zur Drehzahlstabilisierung des Zellenrotors im Druckwellenlader dient und elektrisch oder mechanisch angetrieben ist.

6. Motor nach einem der Ansprüche 1 bis 5, dadurch gekennzeichnet, dass zwischen dem Auslass (15) des Motors und dem Dreiwegkatalysator (4) eine Heizeinrichtung (22) angeordnet ist, um bei niedrigen Abgastemperaturen sowohl den Dreiwegkatalysator (4) schneller auf seine optimale Betriebs-Temperatur zu bringen als auch den DruckwellenLader schneller in Betrieb zu setzen.

7. Motor nach Anspruch 6, dadurch gekennzeichnet, dass die Heizeinrichtung ein Brenner (22) mit Luft- und Brennstoffzufuhr (20, 21) ist.

## Claims

1. Spark ignition engine in combination with a pressure wave supercharger (5) and a regulated three-way catalyst (4), characterised in that the three-way catalyst (4) is followed by an oxidation catalyst (12) which is disposed between the outlet of the pressure wave supercharger (5) and the exhaust (11).

2. Engine according to claim 1, characterised in that a charger throttle (10) is provided at the inlet of the pressure wave supercharger (5) in order to control the amount of scavenging air.

3. Engine according to claim 1 or 2, characterised in that control means are provided at the outlet of the pressure wave supercharger (5) in order to regulate the charging pressure.

4. Engine according to claim 3, characterised in that the control means include a wastegate flap (19).

5. Engine according to one of claims 1 to 4, characterised in that the pressure wave supercharger (5) comprises a drive (7) which serves for the stabilisation of the rotational speed of the cell rotor in the pressure wave supercharger and is electrically or mechanically driven.

6. Engine according to one of claims 1 to 5, characterised in that a heating device (22) is disposed between the outlet (15) of the engine and the three-way catalyst (4) in order both to bring the three-way catalyst (4) to its optimum operating temperature sooner and to allow a quicker operation of the pressure wave supercharger in the case of low exhaust gas temperatures.

7. Engine according to claim 6, characterised in that the heating device is a burner (22) comprising an air and a fuel supply (20, 21).

## Revendications

1. Moteur à allumage par étincelle en combinaison avec un compresseur à ondes de pression (5) et un catalyseur réglé à trois voies (4), caractérisé en ce que ledit catalyseur à trois voies (4) est suivi d'un convertisseur catalytique à oxydation (12) disposé entre la sortie du compresseur à ondes de pression (5) et l'échappement (11).

2. Moteur selon la revendication 1, caractérisé en ce qu'une soupape d'étranglement (10) du compresseur est disposée dans l'admission du compresseur à ondes de pression afin de régler la quantité d'air de balayage.

3. Moteur selon la revendication 1 ou 2, caractérisé en ce que la sortie du compresseur à ondes de pression (5) comporte des moyens de commande permettant de régler la pression d'admission.

4. Moteur selon la revendication 3, caractérisé en ce que lesdits moyens de commande comprennent une soupape de décharge (19).

5. Moteur selon l'une des revendications 1 à 4, caractérisé en ce que le compresseur à ondes de pression (5) comporte un entraînement (7) qui sert à la stabilisation du rotor à cellules dans le compresseur à ondes de pression et est entraîné par voie électrique ou mécanique.

6. Moteur selon l'une des revendications 1 à 5, caractérisé en ce qu'un dispositif de chauffage (22) est disposé entre l'échappement (15) du moteur et le catalyseur à trois voies (4) afin d'amener plus rapidement le catalyseur à trois voies (4) à sa température de service optimale et de mettre en marche plus rapidement le compresseur à ondes de pression en cas de basses températures du gaz d'échappement.

7. Moteur selon la revendication 6, caractérisé en ce que ledit dispositif de chauffage est un brûleur (22) comprenant une admission d'air et de combustible (20, 21).
